# EUROPÄISCHE PATENTSCHRIFT

(11) **EP 1 941 283 B1**
(45) Veröffentlichungstag und Bekanntmachung des Hinweises auf die Patenterteilung: **23.12.2009**
(21) Anmeldenummer: 06792332.6
(22) Anmeldetag: 30.09.2006
(51) Int. Cl.: G01N 35/00, B25J 9/02, B25J 11/00, B01L 3/02

(54) **LABOR-ROBOTER-ANORDNUNG**
LABORATORY ROBOT ASSEMBLY
SYSTEME DE ROBOT DE LABORATOIRE

(30) Priorität: 17.10.2005 DE 102005049920
(43) Veröffentlichungstag der Anmeldung: 09.07.2008
(60) Teilanmeldung: 09011368.9
(73) Patentinhaber: Manz Automation AG, 72768 Reutlingen (DE)
(72) Erfinder: MANZ, Dieter, 72667 Schlaitdorf (DE); OBERDORFER, Berend, 72124 Pliezhausen-Rübgarten (DE)
(74) Vertreter: Kohler Schmid Möbus
(86) Internationale Anmeldenummer: PCT/EP2006/009507
(87) Internationale Veröffentlichungsnummer: WO 2007/045341

(56) Entgegenhaltungen:
- WO-A-03/061830
- WO-A2-03/035239

## Beschreibung

Die Erfindung betrifft eine Laborroboteranordnung für den Biowissenschaftsbereich (Life-Science-Bereich), umfassend zumindest ein erstes Robotermodul mit einem X-Achsenarm, an dem zumindest ein Y-Achsenarm in X-Richtung bewegbar angeordnet ist.

Im Life-Science-Bereich müssen Flüssigkeiten, Feststoffe und Objekte automatisiert gehandhabt werden. Beispielsweise müssen aus einer Menge von Proben, Proben mit spezifischen Eigenschaften entnommen werden. Die entnommenen Proben müssen entweder analysiert werden oder anderen Proben zugeführt werden. Auch ist es denkbar, dass Proben verdünnt werden müssen. Weitere Anwendungen sind möglich und denkbar. Da diese Vorgänge häufig standardisiert sind, sollten Sie vorzugsweise automatisiert ablaufen. Zu diesem Zweck sind bereits verschiedenste Roboteranordnungen bekannt. Häufig sind die bekannten Anordnungen nur für wenige Aufgaben geeignet. WO03/061830 offenbart eine modulare Laborroboteranordnung. Aufgabe der vorliegenden Erfindung ist es, eine Laborroboteranordnung bereitzustellen, mit der unterschiedlichste Aufgaben, die im Life-Science-Bereich anfallen, bearbeitet werden können.

Erfindungsgemäß wird diese Aufgabe auf ebenso überraschende wie wirkungsvolle Art und Weise mit einer Roboteranordnung gemäβ Anspruch 1 gelöst.

Hier mit wird die Modularität des Systems erhöht. Zudem ist es möglich, dass die Y-Achsenarme nahezu den gesamten Arbeitsbereich überfahren können. Dadurch sind größere Anordnungen von Proben handhabbar. Die Roboteranordnung kann mit einer Verbindung zu einem Ablagesystem ausgestattet sein.

Bei einer Ausführungsform, die auch als eigenständige Erfindung betrachtet wird, kann vorgesehen sein, dass an dem Y-Achsenarm eine in Y-Richtung bewegbare Ankoppeleinrichtung zum Ankoppeln eines Arbeitsmoduls vorgesehen ist. Durch diese Maßnahme ist es möglich, die Roboteranordnung für verschiedene Einsatzzwecke zu nutzen. Während im Stand der Technik beispielsweise Roboteranordnungen bekannt sind, bei denen an einem Y-Achsenarm Pipettiernadeln fest installiert sind und der Y-Achsenarm daher ausschließlich zum Pipettieren verwendet werden kann, ist es mit der erfindungsgemäßen Anordnung möglich, an den Y-Achsenarmen unterschiedlichste Arbeitsmodule anzukoppeln, sodass der Y-Achsenarm je nach angekoppeltem Arbeitsmodul unterschiedlich einsetzbar ist. Beispielsweise kann ein Pipettiermodul oder auch ein Greifer-Modul angekoppelt werden. Durch den Wechsel von Pipettiermodulen können auch Pipettiernadeln schneller ausgetauscht werden. Die erfindungsgemäße Roboteranordnung zeichnet sich daher durch eine große Modularität aus.

Vorzugsweise sind benachbarte Robotermodule miteinander verbindbar. Die Verbindung kann dabei als Rast- und/oder Steckverbindung ausgebildet sein. Benachbarte X-Achsenarme können dadurch zu einem gemeinsamen X-Achsenarm verbunden werden und/oder in Anlage aneinander gehalten werden.

Um ein störungsfreies Übergehen eines Y-Achsenarms auf den X-Achsenarm eines benachbarten Robotermoduls sicherzustellen, ist es vorteilhaft, wenn die den Y-Achsenarmen zugeordneten Kabelführungen benachbarter Robotermodule in unterschiedlichen Ebenen angeordnet sind. Um ein Übergehen eines Y-Achsenarms zu ermöglichen, kann es notwendig sein, die Kabelführung für diesen Y-Achsenarm zu verlängern beziehungsweise standardmäßig eine längere Kabelführung vorzusehen oder eine bestehende Kabelführung durch eine längere zu ersetzen.

Die Robotermodule sind besonders einfach einsetzbar und handhabbar, wenn sie als Tischgerät ausgebildet sind. Werden größere Roboteranordnungen benötigt, können mehrere Robotermodule einfach aneinander gereiht werden.

Bei einer besonders bevorzugten Ausführungsform können an zumindest einem Robotermodul zumindest zwei Y-Achsenarme vorgesehen sein. Beispielsweise kann an einem ersten Y-Achsenarm ein Pipettiermodul und an einem zweiten Y-Achsenarm ein Greifermodul vorgesehen sein. Durch das Pipettiermodul können beispielsweise Proben aus Behältern entnommen werden und durch das Greifermodul können Proben beziehungsweise Behälter ausgetauscht werden. Es ist jedoch auch denkbar, an beiden Y-Achsenarmen Pipettiermodule vorzusehen, um dadurch das Bearbeiten einer Charge zu beschleunigen oder größere Chargen bearbeiten zu können.

Die Einsatzmöglichkeiten werden erweitert, wenn das Arbeitsmodul in Z-Richtung bewegbar ist. Dazu ist es vorzugsweise als Z-Achsenarm ausgebildet oder umfasst einen Z-Achsenarm. Denkbar ist jedoch auch, dass die Anköppeteinrichtung relativ zum Y-Achsenarm in Z-Richtung bewegbar und antreibbar ist. Wenn das Arbeitsmodul als Z-Achsenarm ausgebildet ist, kann an diesen wiederum ein Arbeitsmodul, wie ein Pipettiermodul oder ein Greifermodul, angekoppelt werden. Alternativ kann an dem anzukoppelnden Arbeitsmodul ein Z-Achsenarm vorgesehen sein, der eine Bewegung des (übrigen) Arbeitsmoduls relativ zum Y-Achsenarm in Z-Richtung erlaubt. Für die Pipettiernadeln eines Pipettiermoduls ergeben sich daher zwei Verstellmöglichkeiten in Z-Richtung, einmal über das Arbeitsmodul relativ zum Y-Achsenarm und einmal relativ zum Arbeitsmodul.

Bei einer bevorzugten Weiterbildung kann vorgesehen sein, dass beide Y-Achsenarme zumindest eine Ankoppeleinrichtung aufweisen. Dadurch können noch mehr unterschiedliche oder gleichartige Arbeitsmodule angekoppelt und eingesetzt werden. Die Modularität und der Einsatzbereich werden dadurch weiter erhöht bzw. vergrößert.

Bei einer besonders bevorzugten Ausführungsform kann vorgesehen sein, dass zumindest ein Y-Achsenarm zwei Ankoppeleinrichtungen aufweist. Vorzugsweise sind die Ankoppeleinrichtungen unabhängig voneinander in Y-Richtung bewegbar. Besonders bevorzugt ist es, wenn sie in X-Richtung gesehen an unterschiedlichen Seiten des Y-Achsenarms angeordnet sind und individuell antreibbar sind.

In bevorzugter Ausgestaltung der Erfindung kann vorgesehen sein, dass die Ankoppeleinrichtung Anschlüsse, insbesondere einen elektrischen Anschluss und/oder Datenanschluss, für das anzukoppelnde Arbeitsmodul aufweist. Es können unterschiedliche Maßnahmen vorgesehen sein, um das Arbeitsmodul an der Ankoppeleinrichtung befestigen zu können. Beispielsweise kann das Arbeitsmodul angeflanscht werden. Es kann jedoch auch eine Rastverbindung oder ein bajonettartiger Verschluss vorgesehen sein.

Um die Elemente des Arbeitsmoduls betätigen zu können, müssen Anschlüsse zur übrigen Roboteranordnung beziehungsweise zum Robotermodul hergestellt werden. Insbesondere ist es vorteilhaft, wenn das Arbeitsmodul über das Robotermodul mit elektrischer Energie versorgt werden kann. Zur Steuerung des Arbeitsmoduls ist es weiterhin vorteilhaft, wenn ein Datenaustausch des Arbeitsmoduls mit einer Steuereinrichtung des Robotermoduls oder der Roboteranordnung möglich ist. Vorzugsweise werden die entsprechenden Verbindungen beim Ankoppeln des Arbeitsmoduls an die Ankoppeleinrichtung selbsttätig hergestellt. Außer den erwähnten Anschlüssen können noch weitere Anschlüsse, beispielsweise ein Pneumatikanschluss oder ein Hydraulikanschluss vorgesehen sein.

Vorzugsweise weist das Robotermodul einen Datenbus, beispielsweise einen CAN-Bus oder Interbus, auf. Daher ist es günstig, wenn der Datenanschluss als Bus-Anbindung, insbesondere als Schnittstelle zu einem CAN-Bus oder Interbus, ausgebildet ist.

Die Relativbewegung des Y-Achsenarms bezüglich des X-Achsenarms und der Ankoppeleinrichtungen bezüglich des Y-Achsenarms erfolgt vorzugsweise über Antriebe. Eine genaue Positionierung wird ermöglicht, wenn zumindest ein Antrieb einen Linearmotor umfasst. Vorzugsweise umfassen alle Achsenantriebe einen Linearmotor. Insbesondere, wenn zwei Ankoppeleinrichtungen an einem Y-Achsenarm vorgesehen sind, können zwei Linearmotoren denselben Stator nutzen. Die Ankoppeleinrichtungen können individuell oder an einem Y-Achsenarm gemeinsam verfahrbar sein.

Bei einer Ausführungsform kann das Arbeitsmodul als Pipettiermodul ausgebildet sein. Dies hat den Vorteil, dass für unterschiedliche Proben unterschiedliche Pipetten und gegebenenfalls Pipetten mit unterschiedlichen Volumina verwendet werden können. Die Pipetten sind daher im Vergleich zum Stand der Technik einfach austauschbar. Ist das Pipettieren abgeschlossen, kann auch das Pipettiermodul gegen ein anderes Arbeitsmodul ausgetauscht werden.

Besonders bevorzugt ist es, wenn das Pipettiermodul mehrere Pipettiernadelaufnahmen und/oder Pipettiernadeln aufweist, die relativ zum Pipettiermodul begrenzt, insbesondere individuell, in Y-Richtung bewegbar sind. Dadurch können gleichzeitig Proben aus unterschiedlichen Behältern entnommen werden, die entweder unterschiedlich groß sind oder unterschiedliche Abstände aufweisen. Das Pipettiermodul kann fest installierte Pipettiernadeln aufweisen, mit oder ohne Piercing-Funktionalität. Das Vorsehen von Pipettiernadelaufnahmen hat den Vorteil, dass Einwegpipetten verwendet werden können. Vorzugsweise weist ein Pipettiermodul mehrere, insbesondere 4, 8 oder 12 Pipettiernadelaufnahmen und/oder Pipettiernadeln auf. Bevorzugt sind die Pipettiernadelaufnahmen und/oder Pipettiernadeln individuell in Y-Richtung bewegbar und verstellbar.

Die Abstände zwischen benachbarten Pipettiernadelaufnahmen und/oder Pipettiernadeln können dabei zum Beispiel im Bereich 4 - 25 mm, vorzugsweise 9 - 20 mm einstellbar sein.

Die Verstellung der Position der Pipettiernadelaufnahmen und/oder Pipettiernadeln kann einfach realisiert werden, wenn für die Bewegung der Pipettiernadelaufnahmen und/oder Pipettiernadeln in Y-Richtung (Kugel-)Spindelantriebe, Piezo- oder Zahnstangenantriebe vorgesehen sind.

Da die Behälter unter Umständen in unterschiedlichen horizontalen Lagen angeordnet sind und/oder unterschiedliche Füllstände aufweisen, ist es vorteilhaft, wenn die Pipettiernadelaufnahmen und/oder Pipettiernadeln, insbesondere individuell, in Z-Richtung relativ zum Arbeitsmodul bewegbar sind.

Für die Bewegung der Pipettiernadelaufnahmen und/oder Pipettiernadeln in Z-Richtung sind dabei in bevorzugter Ausgestaltung der Erfindung Zahnstangenantriebe, Piezoantriebe oder (Kugel-)Spindelantriebe vorgesehen.

Bei einer besonders bevorzugten Ausführungsform der Erfindung kann ein austauschbares Dispensmodul vorgesehen sein, das mit den Pipettiernadeln, insbesondere fluidisch, verbindbar ist. Das Pipettieren kann auf unterschiedliche Art und Weise erfolgen. Beispielsweise können Kolbenhubpipetten, eine Mikropumpe oder ein Pipettieren über eine Flüssigkeitssäule vorgesehen sein. Bei den meisten Pipettierverfahren ist eine Dispenseinrichtung notwendig, die fluidisch mit den Pipetten verbunden ist. Um je nach eingesetztem Pipettiermodul unterschiedliche Pipettierverfahren anwenden zu können, ist es vorteilhaft, wenn die Dispenseinrichtung entsprechend ausgetauscht werden kann und daher ebenfalls als Modul ausgebildet ist.

Die erfindungsgemäße Roboteranordnung, insbesondere ein Robotermodul der Roboteranordnung, kann mit Robotern anderer Hersteller kombiniert werden. Besonders vorteilhaft ist jedoch eine Verwendung als Tischgerät, wobei mit einem Pipettiermodul gleichzeitig mehrere Proben aus einer Anordnung von Behältern entnommen werden. Zu diesem Zweck ist es besonders vorteilhaft, wenn unterhalb des zumindest einen Y-Achsenarms ein Arbeitsdeck vorgesehen ist, das die Proben enthalten kann oder auf dem die Behälter abgestellt sein können. Vorzugsweise ist das Arbeitsdeck austauschbar und an einer Säule des Robotermoduls befestigbar.

Die Roboteranordnung kann beispielsweise als Zelle ausgebildet sein, die einen Knickarmroboter umfasst. Über den Knickarmroboter können Objekte, die beispielsweise analysiert werden müssen, bewegt werden. Mit einem Knickarmroboter können weitere Freiheitsgrade der Bewegung erreicht werden. Außerdem können die Y-Achsenarme des Robotermoduls überwiegend für Analysetätigkeiten verwendet werden.

Besonders bevorzugt ist es, wenn eine Füllstandserkennung zur Detektion des Füllstands eines Behälters vorgesehen ist. Dadurch kann sichergestellt werden, dass eine Pipettiernadel auch in die aufzunehmende Flüssigkeit eintaucht.

Weitere Merkmale und Vorteile der Erfindung ergeben sich aus der nachfolgenden detaillierten Beschreibung von Ausführungsbeispielen der Erfindung anhand der Figuren der Zeichnung, die erfindungswesentliche Einzelheiten zeigt, sowie aus den Ansprüchen.

In der schematischen Zeichnung sind Ausführungsbeispiele der Erfindung dargestellt, welche in der nachfolgenden Beschreibung näher erläutert werden.

### Es zeigen:

- Fig. 1: eine perspektivische Ansicht eines Robotermoduls einer Roboteranordnung;
- Fig. 2: eine perspektivische Ansicht eines Robotermoduls mit Arbeitsdeck;
- Fig. 3: eine Darstellung einer Roboteranordnung mit mehreren Robotermodulen;
- Fig. 4a: eine perspektivische Vorderansicht eines Y-Achsenarms;
- Fig. 4b: eine perspektivische Rückansicht des Y-Achsenarms;
- Fig. 5: eine Darstellung eines Pipettiermoduls;
- Fig. 6: eine weitere Darstellung eines Pipettiermoduls.

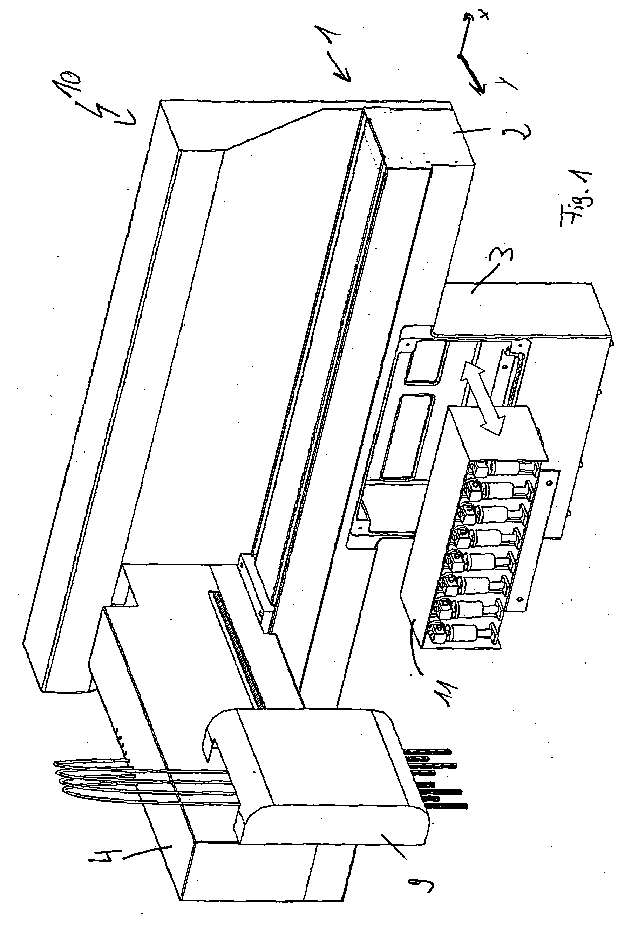

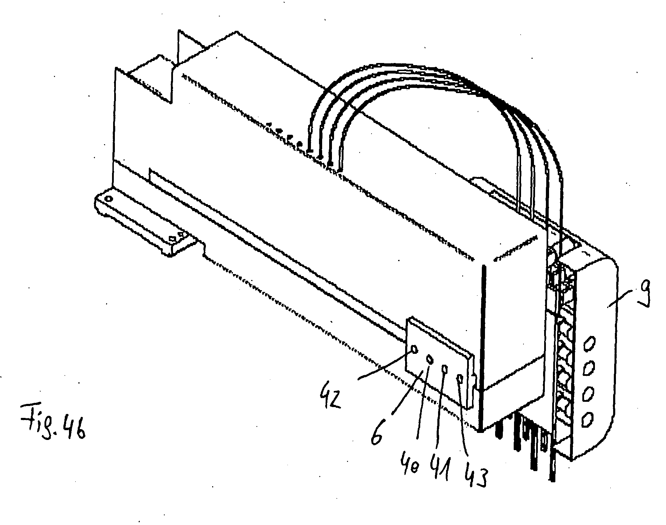

In der Fig. 1 ist ein Robotermodul 1 einer Roboteranordnung 10 gezeigt. Das Robotermodul 1 weist einen X-Achsenarm 2 auf, der an einer Säule 3 des Robotermoduls 1 befestigt ist. An dem X-Achsenarm 2 ist ein Y-Achsenarm 4 angeordnet, wobei der Y-Achsenarm 4 relativ zum X-Achsenarm 2 in Richtung der X-Achse bewegbar ist. Der Y-Achsenarm 4 weist zwei Ankoppeleinrichtungen 6 (siehe Fig. 4b) auf, die zur Kopplung mit einem Arbeitsmodul 9 geeignet sind. Im Ausführungsbeispiel ist das Arbeitsmodul 9 als Pipettiermodul ausgebildet. Die Ankoppeleinrichtungen 6 und somit das Arbeitsmodul 9 sind in Richtung der Y-Achsen relativ zum Y-Achsenarm 4 bewegbar. Zum Bewegen der Ankoppeleinrichtungen 6 und des Y-Achsenarms 4 sind Linearmotoren vorgesehen, die in den Achsenarmen angeordnet sind. An der Säule 3 ist ein Dispensmodul 11 angeordnet, welches mit Pipettiernadeln des Arbeitsmoduls 9 über Schlauchleitungen verbindbar ist.

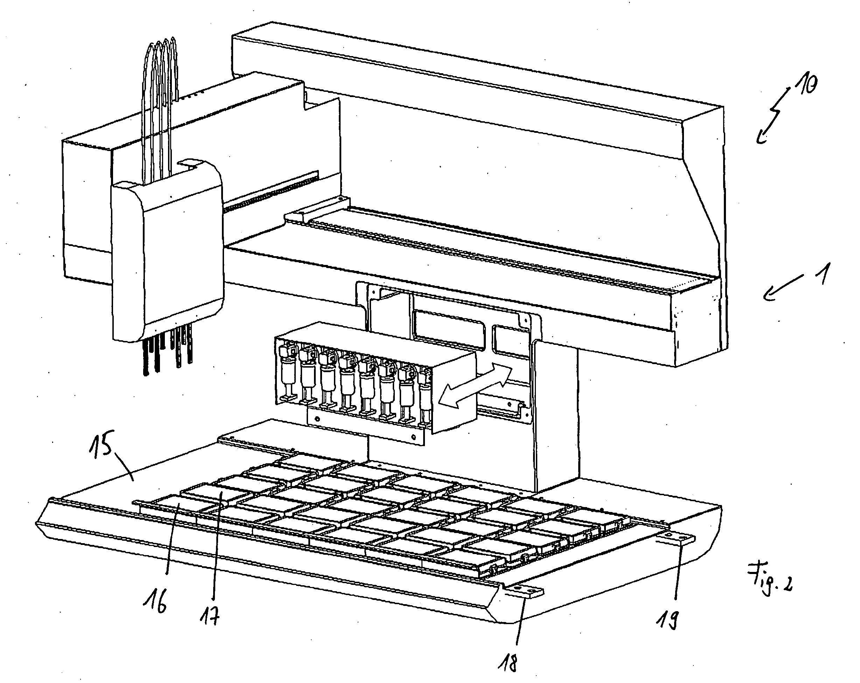

Im Unterschied zur Darstellung der Fig. 1 weist die Roboteranordnung 10 gemäß der Fig. 2 noch zusätzlich ein Arbeitsdeck 15 auf, auf dem unterschiedliche Proben 16, 17, die pipettiert werden müssen, angeordnet sein können. Wie später noch näher erläutert werden wird, können die Abstände der Pipettiernadeln auf die Abstände der Proben 16,17 angepasst werden. Das Arbeitsdeck 15 ist an der Säule 3 befestigbar und austauschbar. Einenends weist das Arbeitsdeck 15 Laschen 18, 19 auf, die zum Anschluss eines benachbarten Robotermoduls 1 dienen.

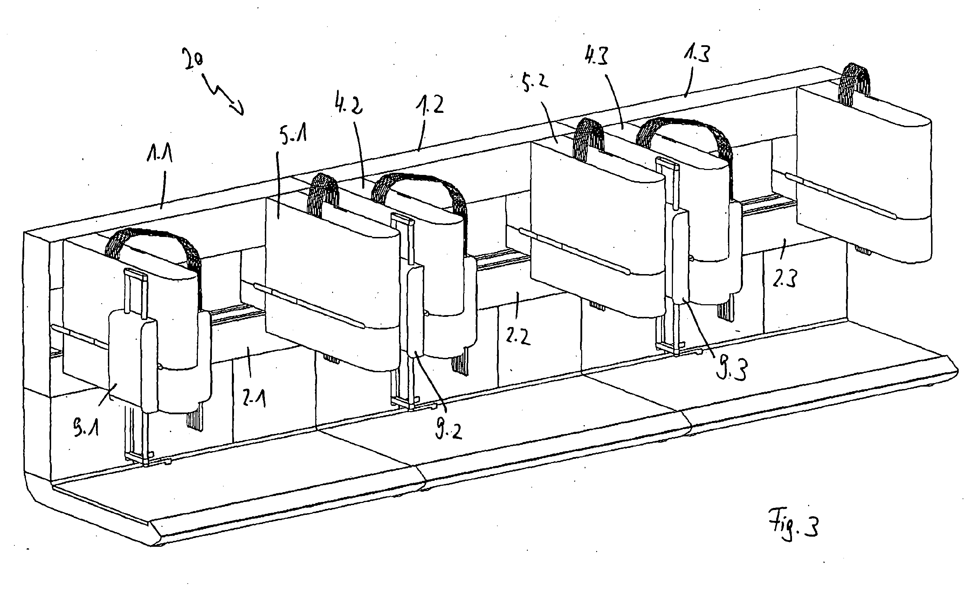

In der Fig. 3 sind drei gleichartige Robotermodule 1.1, 1.2, 1.3 aneinander gereiht, und ergeben somit eine Roboteranordnung 20. Die Besonderheit der Roboteranordnung 20 liegt darin, dass die Y-Achsenarme 5.1, 4.2, 5.2, 4.3 auf den X-Achsenarm 2.1, 2.2, 2.3 des jeweils benachbarten Robotermoduls 1.1, 1.2, 1.3 verfahren werden können. Die Arbeitsmodule 9.1, 9.2, 9.3 sind hier als Greifer ausgebildet und bezüglich der zugeordneten Y-Achsenarme in Z-Richtung bewegbar.

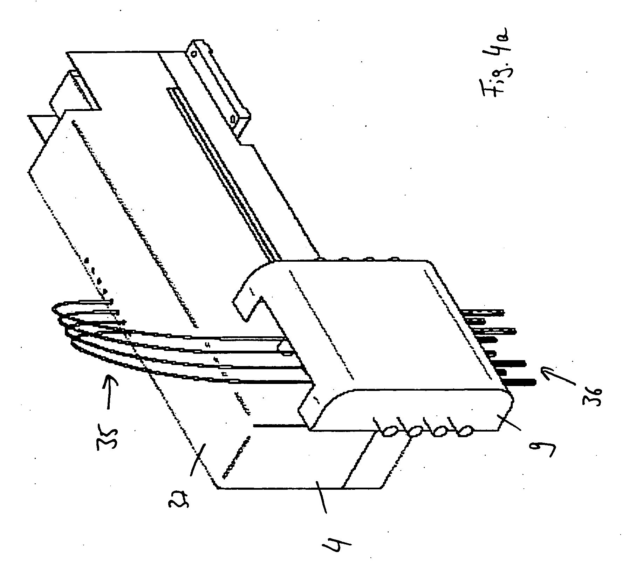

In der Detaildarstellung des Y-Achsenarms 4 der Fig. 4a sind Schlauchleitungen 35 zu erkennen, die an das Arbeitsmodul 9, insbesondere dessen Pipettiernadeln 36 angeschlossen sind. Anderenendes sind die Schlauchleitungen 35 in ein Gehäuse 37 des Y-Achsenarms 4 geführt und gelangen letztendlich zu dem Dispensmodul 11, das in der Säule 3 angeordnet ist.

Gemäß der Rückansicht der Fig. 4b weist die Ankoppeleinrichtung 6 mehrere Anschlüsse 40, 41 auf, wobei der Anschluss 40 als elektrischer Anschluss und der Anschluss 41 als Datenanschluss ausgebildet sind. Über die Gewindebohrungen 42, 43 kann ein Arbeitsmodul 9 angeflanscht werden.

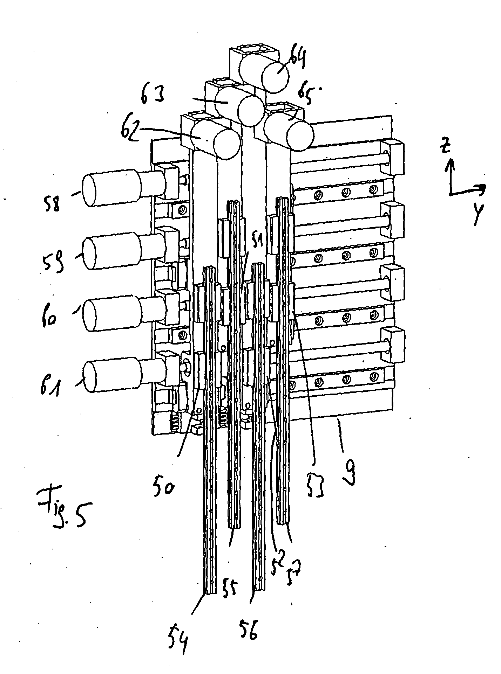

In der Fig. 5 ist ein als Pipettiermodul ausgebildetes Arbeitsmodul 9 ohne Abdeckungen, jedoch nur schematisch, dargestellt. An den Pipettiernadelaufnahmen 50, 51, 52, 53 sind Pipettiernadeln 54, 55, 56, 57 gehalten. Die Pipettiernadelaufnahmen 50 - 53 und somit die Pipettiernadeln 54 - 57 sind begrenzt in Y-Richtung bewegbar. Die Abstände zwischen den Pipettiernadeln 54 - 57 lassen sich daher individuell einstellen. Die Verstellbarkeit in Y-Richtung wird durch Spindelantriebe 58, 59, 60, 61 bewirkt. Außerdem sind die Pipettiernadelaufnahmen 50 - 53 und damit die Pipettiernadeln 54 - 57 in Z-Richtung verstellbar. Die Verstellung in Z-Richtung erfolgt über Zahnstangenantriebe 62, 63, 64, 65. Die Pipettiernadeln 54 - 57 sind austauschbar. Sie können fluidisch mit der Dispenseinrichtung 11 verbunden werden.

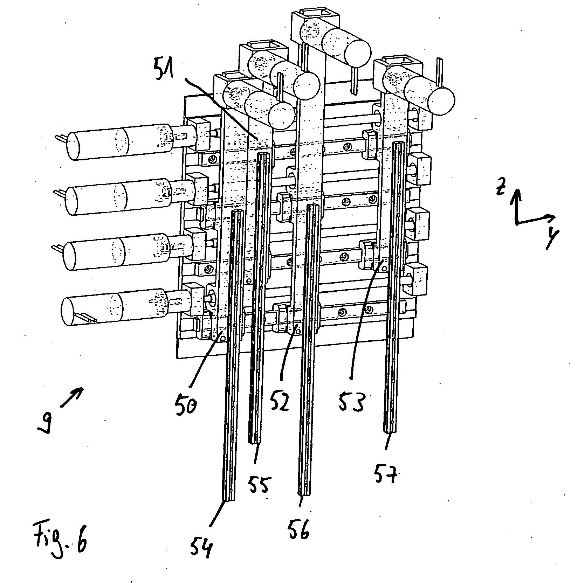

Aus der Fig. 6 wird deutlich, dass die Pipettiernadelaufnahmen 50 - 53 und damit die Pipettiernadeln 54 - 57 sowohl in Y-Richtung als auch in Z-Richtung individuell und unabhängig voneinander verstellbar sind. Insbesondere lassen sich unterschiedliche Abstände zwischen den Pipettiernadelaufnahmen 50 - 53 in Y-Richtung realisieren.

## Patentansprüche

1. Laborroboteranordnung (10, 20) für den Biowissenschaftsbereich, umfassend zumindest ein erstes Robotermodul (1, 1.1, 1.2, 1.3) mit einem X-Achsenarm (2, 2.1, 2.2, 2.3), an dem zumindest ein Y-Achsenarm (4, 4.2, 4.3, 5.1, 5.2) in X-Richtung bewegbar angeordnet ist, **dadurch gekennzeichnet, dass** die Roboteranordnung (10, 20) mehrere Robotermodule (1, 1.1, 1.2,1.3) aufweist, die in X-Richtung nebeneinander angeordnet sind, wobei jedes Robotermodul (1, 1.1, 1.2, 1.3) einen X-Achsenarm (2, 2.1, 2.2, 2.3) und einen Y-Achsenarm (4, 4.2, 4.3, 5.1, 5.2) aufweist und wobei zumindest ein Y-Achsenarm (4, 4.2, 4.3, 5.1, 5.2) eines ersten Robotermoduls (1, 1.1, 1.2, 1.3) zumindest abschnittsweise entlang des X-Achsenarms (2, 2.1, 2.2 , 2.3) eines benachbarten Robotermoduls (1, 1.1, 1.2, 1.3) bewegbar ist.

2. Laborroboteranordnung nach Anspruch 1, **dadurch gekennzeichnet, dass** an dem Y-Achsenarm (4, 4.2, 4.3, 5.1, 5.2) eine in Y-Richtung bewegbare Ankoppeleinrichtung (6) zum Ankoppeln eines Arbeitsmoduls (9, 9.1, 9.2, 9.3) vorgesehen ist.

3. Laborroboteranordnung nach Anspruch 1 oder 2, **dadurch gekennzeichnet, dass** benachbarte Robotermodule (1, 1.1, 1.2, 1.3) miteinander verbindbar sind.

4. Laborroboteranordnung nach Anspruch 1, 2 oder 3, **dadurch gekennzeichnet, dass** die den Y-Achsen zugeordneten Kabelführungen benachbarter Robotermodule (1, 1.1, 1.2, 1.3) in unterschiedlichen Ebenen angeordnet sind.

5. Laborroboteranordnung nach einem der vorhergehenden Ansprüche, **dadurch gekennzeichnet, dass** das oder die Robotermodule (1, 1.1, 1.2, 1.3) als Tischgerät ausgebildet sind.

6. Laborroboteranordnung nach einem der vorhergehenden Ansprüche, **dadurch gekennzeichnet, dass** an zumindest einem Robotermodul (1, 1.1,1.2, 1.3) zumindest zwei Y-Achsenarme (4, 4.2, 4.3, 5.1, 5.2) vorgesehen sind.

7. Laborroboteranordnung nach Anspruch 6, **dadurch gekennzeichnet, dass** beide Y-Achsenarme (4, 4.2, 4.3, 5.1, 5.2) zumindest eine Ankoppeleinrichtung (6) aufweisen.

8. Laborroboteranordnung nach einem der vorhergehenden Ansprüche, **dadurch gekennzeichnet, dass** zumindest ein Y-Achsenarm (4, 4.2, 4.3, 5.1, 5.2) zwei Ankoppeleinrichtungen (6) aufweist.

9. Laborroboteranordnung nach Anspruch 8, **dadurch gekennzeichnet, dass** die Ankoppeleinrichtungen (6) am Y-Achsenarm unabhängig voneinander in Y-Richtung bewegbar sind.

10. Laborroboteranordnung nach einem der vorhergehenden Ansprüche, **dadurch gekennzeichnet, dass** die Ankoppeleinrichtung (6) Anschlüsse (40, 41), insbesondere einen elektrischen Anschluss und/oder Datenanschluss für das anzukoppelnde Arbeitsmodul (9, 9.1, 9.2, 9.3) aufweist.

11. Laborroboteranordnung nach einem der vorhergehenden Ansprüche, **dadurch gekennzeichnet, dass** der Datenanschluss als Bus-Anbindung, insbesondere als Schnittstelle zu einem CAN-Bus oder Interbus, ausgebildet ist.

12. Laborroboteranordnung nach einem der vorhergehenden Ansprüche, **dadurch gekennzeichnet, dass** in oder an den Achsenarmen (2, 2.1 , 2.2 , 2.3, 4, 4.2, 4.3, 5.1, 5.2) Antriebe vorgesehen sind, wobei zumindest ein Antrieb einen Linearmotor umfasst.

13. Laborroboteranordnung nach einem der vorhergehenden Ansprüche, **dadurch gekennzeichnet, dass** das Arbeitsmodul (9, 9.1, 9.2, 9.3) als Pipettiermodul ausgebildet ist.

14. Laborroboteranordnung nach einem der vorhergehenden Ansprüche, **dadurch gekennzeichnet, dass** das Pipettiermodul mehrere Pipettiernadelaufnahmen (50 - 53)und/oder Pipettiernadeln (54 - 57) aufweist, die relativ zum Pipettiermodul begrenzt, insbesondere individuell, in Y-Richtung bewegbar sind.

15. Laborroboteranordnung nach einem der vorhergehenden Ansprüche, **dadurch gekennzeichnet, dass** die Abstände zwischen benachbarten Pipettiernadelaufnahmen (50 - 53) und/oder Pipettiernadeln (54 - 57) zum Beispiel im Bereich 4 - 25 mm, vorzugsweise 9 - 20 mm einstellbar sind.

## Claims

1. Laboratory robot system (10, 20) for the life science field, comprising at least one first robot module (1, 1.1, 1.2, 1.3) having an X-axis arm (2, 2.1, 2.2, 2.3) on which at least one Y-axis arm (4, 4.2, 4.3, 5.1, 5.2) is arranged to be movable in the X direction, **characterized in that** the robot system (10, 20) has a plurality of robot modules (1, 1.1, 1.2, 1.3) which are arranged next to one another in the X direction, each robot module (1, 1.1, 1.2, 1.3) having an X-axis arm (2, 2.1, 2.2, 2.3) and a Y-axis arm (4, 4.2, 4.3, 5.1, 5.2), and at least one Y-axis arm (4, 4.2, 4.3, 5.1, 5.2) of a first robot module (1, 1.1, 1.2, 1.3) being able to be moved along at least a section or sections of the X-axis arm (2, 2.1, 2.2, 2.3) of an adjacent robot module (1, 1.1, 1.2, 1.3).

2. Laboratory robot system according to claim 1, **characterized in that** a coupling-on means (6) for coupling on a working module (9, 9.1, 9.2, 9.3), which coupling-on means (6) is able to be moved in the Y direction, is provided on the Y-axis arm (4, 4.2, 4.3, 5.1, 5.2).

3. Laboratory robot system according to claim 1 or 2, **characterized in that** adjacent robot modules (1, 1.1, 1.2, 1.3) can be connected together.

4. Laboratory robot system according to claim 1, 2 or 3, **characterized in that** the cable ducts, associated with the Y axes, of adjacent robot modules (1, 1.1, 1.2, 1.3) are arranged in different planes.

5. Laboratory robot system according to one of the foregoing claims, **characterized in that** the robot module or modules (1, 1.1, 1.2, 1.3) are in the form of bench-top units.

6. Laboratory robot system according to one of the foregoing claims, **characterized in that** at least two Y-axis arms (4, 4.2, 4.3, 5.1, 5.2) are provided on at least one robot module (1, 1.1, 1.2, 1.3).

7. Laboratory robot system according to claim 6, **characterized in that** both Y-axis arms (4, 4.2, 4.3, 5.1, 5.2) have at least one coupling-on means (6)

8. Laboratory robot system according to one of the foregoing claims, **characterized in that** at least one Y-axis arm (4, 4.2, 4.3, 5.1, 5.2) has two coupling-on means (6).

9. Laboratory robot system according to claim 8, **characterized in that** the coupling-on means (6) are able to be moved in the Y direction on the Y-axis arm independently of one another.

10. Laboratory robot system according to one of the foregoing claims, **characterized in that** the coupling-on means (6) has connections (40, 41), and in particular an electrical connection and/or a data connection, for the working module (9, 9.1, 9.2, 9.3) which is to be coupled on.

11. Laboratory robot system according to one of the foregoing claims, **characterized in that** the data connection takes the form of a bus connection and in particular of an interface with a CAN bus or an Interbus.

12. Laboratory robot system according to one of the foregoing claims, **characterized in that** drives are provided in or on the axis arms (2, 2.1, 2.2, 2.3, 4, 4.2, 4.3, 5.1, 5.2), with at least one drive comprising a linear motor.

13. Laboratory robot system according to one of the foregoing claims, **characterized in that** the working module (9, 9.1, 9.2, 9.3) takes the form of a pipetting module.

14. Laboratory robot system according to one of the foregoing claims, **characterized in that** the pipetting module has a plurality of pipetting needles (54 - 57) and/or mountings (50 - 53) for pipetting needles, which can be moved in the Y direction relative to the pipetting module to a limited degree, in particular individually.

15. Laboratory robot system according to one of the foregoing claims, **characterized in that** the distances between adjacent pipetting needles (54 - 57) and/or mountings (50 - 53) for pipetting needles can be set, such for example as over the range 4 - 25 mm, and preferably 9 - 20 mm.

## Revendications

1. Agencement de robot de laboratoire (10, 20) pour le domaine des sciences biologiques comprenant au moins un premier module de robot (1, 1.1, 1.2, 1.3) comportant un bras selon un axe X (2, 2.1, 2.2, 2.3) sur lequel est agencé de façon mobile dans la direction X au moins un bras selon un axe Y (4, 4.2, 4.3, 5.1, 5.2),
**caractérisé en ce que** l'agencement de robot de laboratoire (10, 20) présente plusieurs modules de robot (1, 1.1, 1.2, 1.3) agencés les uns à côté des autres dans la direction X, chaque module de robot (1, 1.1, 1.2, 1.3) présentant un bras selon l'axe X (2, 2.1, 2.2, 2.3) et un bras selon l'axe Y (4, 4.2, 4.3, 5.1, 5.2) et au moins un bras selon l'axe Y (4, 4.2, 4.3, 5.1, 5.2) d'un premier module de robot (1, 1.1, 1.2, 1.3) étant mobile au moins par endroits le long du bras selon l'axe X (2, 2.1, 2.2, 2.3) d'un module de robot adjacent (1, 1.1, 1.2, 1.3).

2. Agencement de robot de laboratoire selon la revendication 1,
**caractérisé en ce qu'**il est prévu sur le bras selon l'axe Y (4, 4.2, 4.3, 5.1, 5.2) un dispositif de couplage (6) mobile dans la direction Y pour coupler un module de travail (9, 9.1, 9.2, 9.3).

3. Agencement de robot de laboratoire selon l'une des revendications 1 ou 2,
**caractérisé en ce que** les modules de robot adjacents (1, 1.1, 1.2, 1.3) peuvent être raccordés entre eux.

4. Agencement de robot de laboratoire selon l'une des revendications 1, 2 ou 3,
**caractérisé en ce que** les circuits de câblage associés à l'axe Y des modules de robot adjacents (1, 1.1, 1.2, 1.3) sont disposés à différents niveaux.

5. Agencement de robot de laboratoire selon l'une des revendications précédentes,
**caractérisé en ce que** le ou les modules de robot (1, 1.1, 1.2, 1.3) sont réalisés sous la forme d'un appareil de table.

6. Agencement de robot de laboratoire selon l'une des revendications précédentes,
**caractérisé en ce qu'**il est prévu sur au moins un module de robot (1, 1.1, 1.2, 1.3) au moins deux bras selon l'axe Y (4, 4.2, 4.3, 5.1, 5.2).

7. Agencement de robot de laboratoire selon la revendication 6,
**caractérisé en ce que** les deux bras selon l'axe Y (4, 4.2, 4.3, 5.1, 5.2) présentent au moins un dispositif de couplage (6).

8. Agencement de robot de laboratoire selon l'une des revendications précédentes,
**caractérisé en ce qu'**au moins un bras selon l'axe Y (4, 4.2, 4.3, 5.1, 5.2) présente deux dispositifs de couplage (6).

9. Agencement de robot de laboratoire selon la revendication 8,
**caractérisé en ce que** les dispositifs de couplage (6) peuvent se déplacer sur le bras selon l'axe Y dans la direction Y indépendamment l'un de l'autre.

10. Agencement de robot de laboratoire selon l'une des revendications précédentes,
**caractérisé en ce que** le dispositif de couplage (6) présente des raccordements (40, 41), en particulier un raccordement électrique et/ou une prise réseau pour le module de travail à raccorder (9, 9.1, 9.2, 9.3).

11. Agencement de robot de laboratoire selon l'une des revendications précédentes,
**caractérisé en ce que** la prise réseau est réalisée sous la forme d'une prise Bus, en particulier sous la forme d'une interface Bus Can ou Interbus.

12. Agencement de robot de laboratoire selon l'une des revendications précédentes,
**caractérisé en ce qu'**il est prévu sur ou dans les bras (2, 2.1, 2.2, 2.3, 4, 4.2, 4.3, 5.1, 5.2) des entraînements, au moins un entraînement comportant un moteur linéaire.

13. Agencement de robot de laboratoire selon l'une des revendications précédentes,
**caractérisé en ce que** le module de travail (9, 9.1, 9.2, 9.3) est réalisé sous la forme d'un module de pipetage.

14. Agencement de robot de laboratoire selon l'une des revendications précédentes,
**caractérisé en ce que** le module de pipetage présente plusieurs porte-aiguilles (50 - 53) et/ou aiguilles de pipetage (54 -5 7), lesquels peuvent se déplacer dans la direction Y, de façon limitée par rapport au module de pipetage, en particulier individuellement.

15. Agencement de robot de laboratoire selon l'une des revendications précédentes,
**caractérisé en ce que** les distances entre les porte-aiguilles de pipetage (50 - 53) adjacents et/ou les aiguilles de pipetage (54 - 57) adjacentes peuvent être réglées par exemple dans la plage allant de 4 à 25 mm, de préférence de 9 à 20 mm.
